# FASCICULE DE BREVET EUROPEEN

(11) **EP 0 968 959 B1**
(45) Date de publication et mention de la délivrance du brevet: **19.02.2003**
(21) Numéro de dépôt: 99401543.6
(22) Date de dépôt: 22.06.1999
(51) Int. Cl.: C01B 3/50

(54) **Procédé de production de monoxyde de carbone**
Verfahren zur Herstellung von Kohlenmonoxid
Process for the production of carbon monoxide

(30) Priorité: 26.06.1998 FR 9808139
(43) Date de publication de la demande: 05.01.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Billy, Jean, 94420 Plessis Trevise (FR); Fuentes, François, 75013 Paris (FR); Sosson, Nathalie, 94100 Saint Maur des Fossés (FR)
(74) Mandataire: Mercey, Fiona Susan

(56) Documents cités:
- EP-A- 0 213 525
- EP-A- 0 359 629
- EP-A- 0 677 483
- DE-A- 4 210 638
- DE-A- 4 325 513

## Description

La présente invention concerne un procédé et une installation de séparation d'un mélange gazeux contenant de l'hydrogène, du monoxyde de carbone et de faibles quantités d'impuretés (méthane et inertes) pour produire l'hydrogène et le monoxyde de carbone comme produits purs.

Dans le procédé classique, dit "condensation partielle", l'hydrogène, séparé du mélange gazeux, après refroidissement à basse température, est détendu à une pression de l'ordre de 5 à 10 bars afin de fournir des frigories pour maintenir l'installation en froid, et refroidir le mélange gazeux au-dessous de -200°C. Une installation de ce type est décrite dans US-A-4.217.759 et utilise au moins quatre colonnes pour produire du monoxyde de carbone avec un rendement de 95 % et une pureté d'environ 99 %. Le rendement d'hydrogène est de l'ordre de 99,9 % avec une pureté d'environ 95 %.

L'invention a pour but, tout en conservant ces puretés et ces rendements élevés, de simplifier le procédé et l'installation, en réduisant le nombre de colonnes utilisées pour les étapes de séparation. Ainsi la colonne de lavage habituellement placée en tête du procédé et la colonne de distillation pour séparer le monoxyde de carbone et le méthane sont éliminées.

Elle a également pour but d'assurer que la température la plus froide de l'installation sera au-dessus de celle du procédé classique avec des puretés d'hydrogène et des rendements de monoxyde de carbone comparables.

DE-A-2460515 décrit un appareil de séparation d'hydrogène contaminé avec méthane comprenant un premier pot séparateur, une première colonne de stripping (colonne d'épuisement) recevant le gaz du premier pot séparateur, des moyens pour envoyer le gaz de tête à un deuxième pot séparateur et des moyens pour envoyer le liquide du deuxième pot à une deuxième colonne alimentée par le liquide du premier pot séparateur.

EP-A-0017174 décrit un appareil de séparation d'un mélange de monoxyde de carbone, d'hydrogène et de méthane dans lequel le mélange est partiellement condensé et la partie condensée est envoyée en tête d'une première colonne de stripping. Le gaz de tête de la colonne de stripping est refroidi et envoyé à un deuxième séparateur de phases. La partie liquide est envoyée dans une deuxième colonne. Une troisième colonne est alimentée en tête par le liquide de cuve de la deuxième colonne et en cuve par la partie non-condensée du premier séparateur de phases.

La présente invention a également pour but de présenter une installation avec un coût d'investissement réduit par rapport à l'art antérieur en s'affranchissant de tout moyen de production de froid.

L'invention permet dans certains cas d'obtenir une récupération totale d'hydrogène et d'obtenir l'hydrogène à une pression supérieure à celle obtenue par le procédé classique.

A cet effet, l'invention a pour objet un procédé de production de monoxyde de carbone et d'hydrogène à partir d'un mélange gazeux comprenant essentiellement ces deux corps et du méthane comprenant les étapes suivantes
- refroidir le mélange gazeux à traiter afin de le condenser partiellement,
- séparer une partie condensée du mélange d'une partie non condensée contenant principalement l'hydrogène dans un premier séparateur de phases ;
- envoyer au moins une fraction de la partie condensée dans une première colonne de stripping pour produire une fraction gazeuse en tête de colonne comportant l'hydrogène et une fraction liquide en cuve de colonne contenant du monoxyde de carbone et du méthane ;
- envoyer au moins une partie du gaz de tête de la première colonne de stripping dans un deuxième échangeur de chaleur pour le condenser partiellement et former un fluide diphasique,
- séparer le fluide diphasique en une partie condensée et une partie non condensée contenant principalement de l'hydrogène dans un deuxième séparateur de phases,
- envoyer au moins une fraction de la partie condensée dans une deuxième colonne de stripping pour produire une partie gazeuse en tête riche en hydrogène et une fraction liquide en cuve
caractérisée en ce que la partie non condensée du premier séparateur de phases est chauffée et recyclée dans le mélange à traiter ou enlevée et la fraction liquide de la deuxième colonne est riche en monoxide de carbone.

On peut envoyer au moins une partie de la fraction liquide de la première colonne de stripping dans une colonne d'épuration pour produire du monoxyde de carbone substantiellement pur en tête de colonne et un liquide riche en méthane en cuve de colonne.

Eventuellement une partie du gaz de tête de la première colonne de stripping (B) et/ou au moins une partie du gaz riche en hydrogène issu du premier séparateur de phases est envoyé à une unité de perméation ou d'adsorption et un gaz enrichi en monoxyde de carbone est envoyé de l'unité de perméation ou d'adsorption au mélange gazeux à traiter.

Alternativement une partie du gaz de tête de la première colonne de stripping (B) est recyclée au mélange gazeux à traiter sans passer par une unité de perméation ou d'adsorption.

Si la pression du mélange à traiter est élevée, l'énergie de séparation est entièrement apportée par détente Joule Thomson du mélange de départ. Ainsi l'appareil ne comprend pas de turbines de détente, même d'un gaz de cycle.

Sinon, une partie de l'énergie de séparation est apportée par échange de chaleur du mélange gazeux à traiter avec un liquide cryogénique ou par injection de liquide cryogénique dans une des colonnes ou au moyen d'un cycle frigorifique utilisant un fluide frigorifique autonome.

Autrement, on peut détendre la partie non condensée du deuxième séparateur de phases dans une turbine.

Au plus 15%, et de préférence au plus 10%, du mélange à traiter est envoyé au deuxième séparateur de phases .

De préférence le mélange à traiter contient moins d'1% de méthane.

Le gaz de tête de la première colonne de stripping peut contenir entre 60 et 80% d'hydrogène et, de préférence, entre 71 et 74 % d'hydrogène.

Le liquide de cuve de la première colonne de stripping peut contenir entre 95 et 99.9% de monoxyde de carbone et, de préférence, entre 98.8 et 99.1% de monoxyde de carbone.

Selon un autre aspect de l'invention, il est prévu une installation de production de monoxyde de carbone et d'hydrogène à partir d'un mélange gazeux comprenant essentiellement ces deux corps et de faibles quantités de méthane et d'impuretés comprenant
un premier échangeur de chaleur, un premier séparateur de phases, une première colonne de stripping, des moyens pour refroidir le mélange gazeux à traiter dans le premier échangeur de chaleur, des moyens pour introduire au moins une partie du mélange gazeux refroidi dans le premier séparateur de phases et pour en soutirer une partie gazeuse, comprenant essentiellement de l'hydrogène, et une partie liquide, des moyens pour envoyer au moins une fraction de la partie liquide à la colonne de stripping, pour en soutirer un liquide contenant principalement du monoxyde de carbone et du méthane ;
un deuxième échangeur de chaleur, un deuxième séparateur de phases, une deuxième colonne de stripping, des moyens pour envoyer au moins une partie du gaz de tête de la première colonne de stripping au deuxième échangeur de chaleur et ensuite au deuxième séparateur de phases et des moyens pour envoyer au moins une partie de la partie condensée du deuxième séparateur de phases à la deuxième colonne de stripping et des moyens pour soutirer de la deuxième colonne de stripping un gaz riche en hydrogène et un liquide riche en monoxyde de carbone caractérisé en ce qu'elle comprend des moyens pour chauffer la partie gazeuse du premier séparateur de phases et pour regarder la partie gazeuse au mélange gazeux à traiter. Elle peut comprendre une colonne d'épuration et des moyens pour envoyer au moins une partie du liquide de cuve de la première colonne de stripping en tête de la colonne d'épuration et des moyens pour soutirer un gaz de tête enrichi en monoxyde de carbone et un liquide de cuve enrichi en méthane.

De préférence le liquide du deuxième séparateur de phases est envoyé en tête de la deuxième colonne de stripping.

L'installation peut comprendre des moyens pour séparer un gaz par perméation ou adsorption, des moyens pour envoyer une partie du gaz de tête de la première colonne de stripping et/ou au moins une partie de la partie non-condensée du premier séparateur de phases à des moyens de séparation par perméation ou adsorption mélangé pour produire une fraction gazeuse enrichie en monoxyde de carbone et des moyens pour renvoyer cette fraction au mélange à traiter.

L'installation peut comprendre un cycle frigorifique utilisant un fluide frigorifique autonome et/ou une turbine et des moyens pour y envoyer une partie non condensée du deuxième séparateur de phases.

Dans certains cas, la première colonne de stripping n'a pas de condenseur de tête et la deuxième colonne de stripping n'a pas de rebouilleur de cuve.

Le gaz de tête de la première colonne de stripping peut également être mélangé au gaz riche en hydrogène issu du premier séparateur de phases en amont de l'unité de perméation ou d'adsorption. Seule la portion gazeuse enrichie en monoxyde de carbone est alors recyclée dans le gaz de charge.

Optionnellement le gaz de tête de la première colonne de stripping peut être recyclé au gaz de départ sans passer par l'unité de perméation ou d'adsorption.

Si la pression du mélange de départ est suffisamment élevée, toute l'énergie de séparation peut être apportée par détente Joule Thomson du mélange de départ.

Sinon une partie de l'énergie de séparation est apportée par échange de chaleur du mélange de départ avec un liquide cryogénique et/ou au moyen d'un cycle frigorifique utilisant un fluide frigorifique autonome.

L'installation peut comprendre des moyens pour envoyer au moins une partie du gaz de tête de la première colonne de stripping aux moyens de séparation par perméation ou d'adsorption mélangé avec la portion gazeuse enrichie en monoxyde de carbone et/ou des moyens pour recycler au moins une partie du gaz de tête de la première colonne de stripping au mélange gazeux à traiter.

Elle peut comprendre un cycle frigorifique utilisant un fluide frigorifique autonome.

Dans ce cas l'utilisation de production de froid est limitée à la partie la plus froide du procédé qui ne traite qu'une fraction du mélange gazeux initial (environ 10%).

Avec certains procédés selon l'invention, on n'a plus besoin de refroidir le gaz à traiter jusqu'à -200 °C comme précédemment ; une température de -175°C est suffisante pour le procédé de séparation.

En tout, l'investissement correspondant à l'installation selon l'invention est d'environ 12 % inférieur à celui des procédés connus pour cette séparation.

D'autres caractéristiques et avantages de l'invention ressortiront mieux de la description qui suit, faite en référence aux dessins annexés,
- la figure 1 est un schéma de principe d'une opération de séparation,
- la figure 2 est un schéma de principe d'une opération de séparation selon un mode de réalisation de l'invention et,

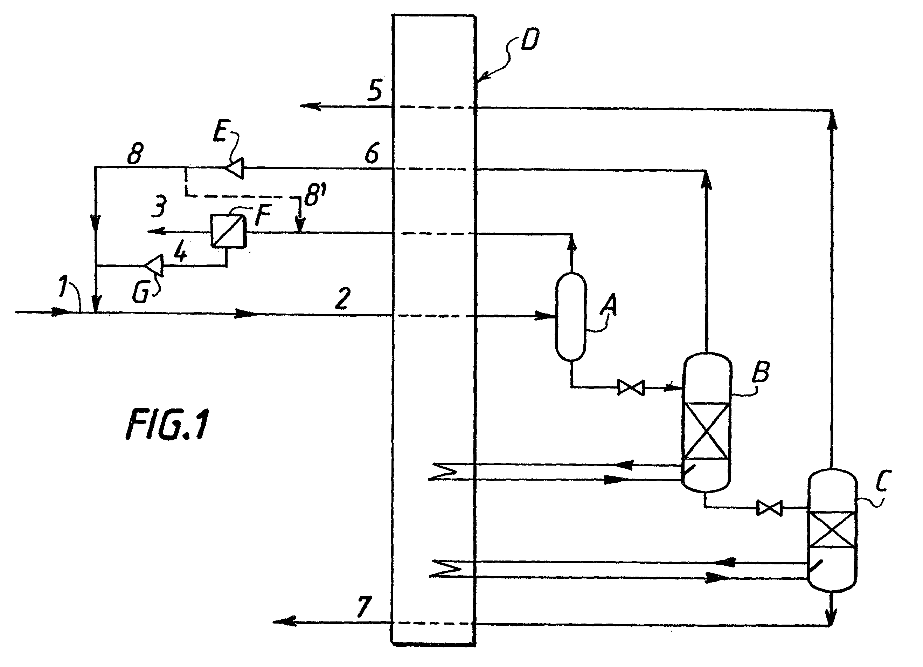

Dans le système illustré par la figure 1, un mélange gazeux de gaz de synthèse 1 contient du méthane résiduel ainsi que de l'hydrogène et du monoxyde de carbone. Ce mélange contient de façon caractéristique 50 à 70 moles % d'hydrogène, 15 à 45 moles % de monoxyde de carbone et 0,2 à 0,6 moles % de méthane, avec de faibles quantités d'impuretés.

Le mélange gazeux à traiter est disponible à 60 bars, traverse la conduite 2 et est refroidi à une température d'environ -175 °C dans l'échangeur D, d'où il sort partiellement condensé. Une fraction liquide et une fraction gazeuse sont soutirées du premier séparateur de phase A. La fraction gazeuse contient majoritairement de l'hydrogène et est réchauffée dans le premier échangeur D pour être envoyée dans une unité de perméation F produisant un résidu riche en monoxyde de carbone 4 et un perméat d'hydrogène 3 pur produit à 20 bars.

Toute la fraction liquide, contenant principalement de l'hydrogène et du monoxyde de carbone, est détendue dans une vanne pour réduire sa pression et entièrement introduite en tête de la première colonne de stripping B à 20 bars.

Le gaz de flash contenant de l'hydrogène issu de cette colonne B est réchauffé dans l'échangeur D.

Tout le liquide issu de cette colonne B à -151,7 °C qui est composé principalement de monoxyde de carbone est ensuite détendu à -177,7 °C et envoyé en tête d'une colonne d'épuration C à 4 bars comme seule alimentation de la colonne pour produire comme gaz de tête du monoxyde de carbone pur et en cuve un liquide enrichi en méthane. Le monoxyde de carbone et le liquide de cuve contenant le méthane et les impuretés lourdes sont soutirés respectivement par les conduites 5 et 7 et réchauffés dans l'échangeur D.

Dans le cas où le mélange gazeux à traiter serait disponible à suffisamment haute pression, on peut supprimer tout moyen de production de froid car les pertes thermiques sont compensées par l'effet Joule Thomson sur le gaz à traiter.

Dans le cas contraire, un moyen de production de froid (injection d'azote liquide au bout froid de l'échangeur ou cycle frigorifique indépendant tel que celui de EP-A-677483) peut être ajouté au système.

Les cuves des colonnes de stripping B et d'épuration C sont chauffées en vaporisant partiellement dans l'échangeur D le liquide du premier plateau à partir de la cuve.

Le gaz résiduaire riche en monoxyde de carbone 4 issu de l'unité de perméation F et le gaz de flash 6 issu de la colonne de stripping sont recomprimés par les compresseurs G, E respectivement et réinjectés dans le gaz de charge.

En variante, le gaz de flash 6 peut aussi être recyclé en amont de l'unité de perméation F (flux 8' au lieu de 8) après avoir été comprimé.

Ce procédé permet d'obtenir une récupération totale d'hydrogène et d'obtenir l'hydrogène à une pression supérieure à celle obtenue par le procédé classique.

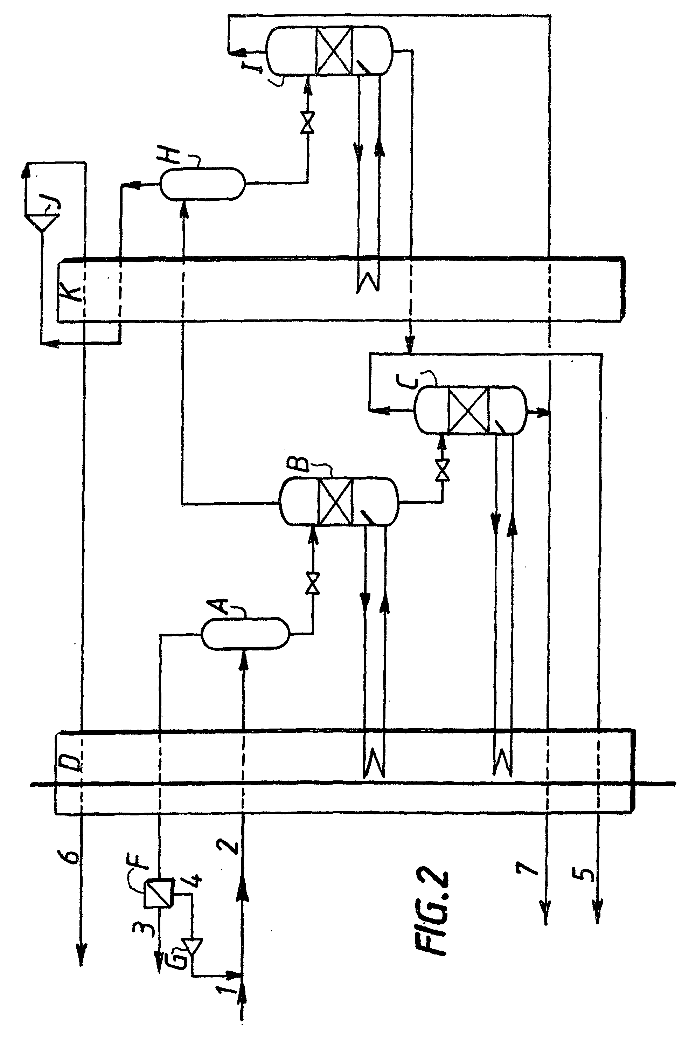

Dans la figure 2, l'installation est identique à celle de la figure 1 à part les différences suivantes :
le gaz de tête de la première colonne de stripping B (constituant environ 10 % du mélange gazeux à traiter) n'est pas envoyé à l'échangeur D mais à un deuxième échangeur K où il se refroidit à une température de -200°C pour sortir partiellement condensé. Après séparation dans un séparateur de phases H, une partie gazeuse contenant majoritairement de l'hydrogène est chauffée dans l'échangeur K, détendue dans une turbine J (ou deux turbines en série) puis réchauffée dans les échangeurs K et D et soutiré en 6. La partie liquide du séparateur de phases H contenant principalement de l'hydrogène et du monoxyde de carbone est détendue dans une vanne pour réduire sa pression et introduite en tête d'une deuxième colonne de stripping I à 4 bars comme seule alimentation de celle-ci. Le liquide issu de cette deuxième colonne I qui est du monoxyde de carbone pur est vaporisé dans le deuxième échangeur K, mélangé au monoxyde de carbone pur issu de la tête de la colonne d'épuration C, réchauffé dans l'échangeur D et soutiré en 5.

Alternativement les deux débits de monoxyde de carbone des colonnes C et I peuvent être récupérés à des pressions différentes. Par exemple le monoxyde de carbone liquide de la colonne I peut être pompé et vaporisé en K à la haute pression.

Le gaz de tête contenant principalement de l'hydrogène est réchauffé dans l'échangeur K, mélangé au liquide de cuve de la colonne C, contenant le méthane et les impuretés lourdes, réchauffé dans le premier échangeur D et soutiré par la conduite 7.

Evidemment, dans ce cas une partie du gaz de tête de la première colonne de stripping peut être recyclé au mélange à traiter après une étape de compression et éventuellement une étape de séparation.

Dans le cas des deux figures, l'unité de séparation par perméation F peut être remplacée par une unité de séparation par adsorption.

## Revendications

1. Procédé de production de monoxyde de carbone et d'hydrogène à partir d'un mélange gazeux à traiter comprenant essentiellement ces deux corps et du méthane comprenant les étapes suivantes :
- refroidir le mélange gazeux à traiter (2) afin de le condenser partiellement,
- séparer une partie condensée du mélange d'une partie non condensée contenant principalement l'hydrogène dans un premier séparateur de phases (A) ;
- envoyer au moins une fraction de la partie condensée dans une première colonne de stripping (B) pour produire une fraction gazeuse en tête de colonne comportant l'hydrogène et une fraction liquide en cuve de colonne contenant du monoxyde de carbone et du méthane ;
- envoyer au moins une partie du gaz de tête de la première colonne de stripping (B) dans un deuxième échangeur de chaleur (K) pour le condenser partiellement et former un fluide diphasique,
- séparer le fluide diphasique en une partie condensée et une partie non condensée contenant principalement de l'hydrogène dans un deuxième séparateur de phases (H),
- envoyer au moins une fraction de la partie condensée dans une deuxième colonne de stripping (I) pour produire une partie gazeuse en tête riche en hydrogène et une fraction liquide en cuve carbone **caractérisée en ce que** la partie non condensée du premier séparateur de phases est chauffée et recyclée dans le mélange à traiter ou enlevée et la fraction liquide en cuve de la deuxième colonne est riche en monoxyde de carbone.

2. Procédé selon la revendication 1 dans lequel on envoie au moins une partie de la fraction liquide de la première colonne de stripping (B) dans une colonne d'épuration (C) pour produire du monoxyde de carbone substantiellement pur en tête de colonne et un liquide riche en méthane en cuve de colonne.

3. Procédé selon la revendication 1 ou 2 dans lequel une partie du gaz de tête de la première colonne de stripping (B) et/ou au moins une partie du gaz riche en hydrogène issu du premier séparateur de phases est envoyé à une unité de perméation ou une unité d'adsorption et un gaz enrichi en monoxyde de carbone est envoyé de l'unité de perméation ou d'adsorption au mélange gazeux à traiter.

4. Procédé selon la revendication 1 dans lequel une partie du gaz de tête de la première colonne de stripping (B) est recyclée au mélange gazeux à traiter sans passer par une unité de perméation ou d'adsorption.

5. Procédé selon l'une des revendications précédentes dans lequel l'énergie de séparation est entièrement apportée par détente Joule Thomson du mélange gazeux à traiter.

6. Procédé selon l'une des revendications 1 à 4 dans lequel une partie de l'énergie de séparation est apportée par échange de chaleur du mélange gazeux à traiter avec un liquide cryogénique ou par injection de liquide cryogénique dans une des colonnes.

7. Procédé selon l'une des revendications 1 à 4 ou 6 dans lequel une partie de l'énergie de séparation est apportée au moyen d'un cycle frigorifique utilisant un fluide frigorifique autonome.

8. Procédé selon l'une des revendications précédentes comprenant l'étape de détendre la partie non condensée du deuxième séparateur de phases (H) dans une turbine (J).

9. Procédé selon l'une des revendications précédentes dans lequel au plus 15% du mélange à traiter est envoyé au deuxième séparateur de phases (H).

10. Installation de production de monoxyde de carbone et d'hydrogène à partir d'un mélange gazeux comprenant essentiellement ces deux corps et de faibles quantités de méthane et d'impuretés comprenant :
- un premier échangeur de chaleur (D), un premier séparateur de phases (A), une première colonne de stripping (B), des moyens pour refroidir le mélange gazeux à traiter dans le premier échangeur de chaleur, des moyens (1,2) pour introduire au moins une partie du mélange gazeux refroidi dans le premier séparateur de phases et pour en soutirer une partie gazeuse, comprenant essentiellement de l'hydrogène, et une partie liquide, des moyens pour envoyer au moins une fraction de la partie liquide à la première colonne de stripping et des moyens pour en soutirer un liquide contenant principalement du monoxyde de carbone et du méthane ;
- un deuxième échangeur de chaleur (K), un deuxième séparateur de phases (H), une deuxième colonne de stripping (I), des moyens pour envoyer au moins une partie du gaz de tête de la première colonne de stripping au deuxième échangeur de chaleur et ensuite au deuxième séparateur de phases et des moyens pour envoyer au moins une partie de la partie condensée du deuxième séparateur de phases à la deuxième colonne de stripping et des moyens pour soutirer de la deuxième colonne de stripping un gaz riche en hydrogène et un liquide riche en monoxyde de carbone **caractérisé en ce qu'**elle comprend des moyens pour chauffer la partie gazeuse du premier séparateur de phases et pour recycler la partie gazeuse au mélange gazeux à traiter.

11. Installation selon la revendication 15 comprenant une colonne d'épuration (C ) et des moyens pour envoyer au moins une partie du liquide de cuve de la première colonne de stripping en tête de la colonne d'épuration et des moyens pour soutirer un gaz de tête enrichi en monoxyde de carbone et un liquide de cuve enrichi en méthane.

12. Installation selon la revendication 10 dans laquelle le liquide du deuxième séparateur de phases (H) est envoyé en tête de la deuxième colonne de stripping (I).

13. Installation selon la revendication 10 ou 11 comprenant des moyens (F) pour séparer un gaz par perméation ou adsorption, des moyens (8') pour envoyer une partie du gaz de tête de la première colonne de stripping (B) et/ou au moins une partie de la partie non-condensée du premier séparateur de phases (A) à des moyens de séparation par perméation ou adsorption mélangé pour produire une fraction gazeuse enrichie en monoxyde de carbone et des moyens pour renvoyer cette fraction au mélange à traiter.

14. Installation selon la revendication 10, 11 ou 12 comprenant un cycle frigorifique utilisant un fluide frigorifique autonome.

15. Installation selon la revendication 10, 11, 12 ou 13 comprenant une turbine (J) et des moyens pour y envoyer une partie non condensée du deuxième séparateur de phases (H).

16. Installation selon l'une des revendications 10 à 15 dans laquelle la première colonne de stripping n'a pas de condenseur de tête.

17. Installation selon l'une des revendications 10 à 16 dans laquelle la deuxième colonne de stripping n'a pas de rebouilleur de cuve.

## Patentansprüche

1. Verfahren zur Gewinnung von Kohlenmonoxid und Wasserstoff aus einem zu behandelnden Gasgemisch, das im wesentlichen diese beiden Substanzen und Methan enthält, bei dem man:
- das zu behandelnde Gasgemisch (2) abkühlt und dadurch partiell kondensiert,
- in einem ersten Phasenscheider (A) einen kondensierten Teil des Gemischs von einem nicht kondensierten Teil, der hauptsächlich Wasserstoff enthält, abtrennt;
- mindestens eine Fraktion des kondensierten Teils in eine erste Abtriebssäule (B) einleitet, wobei man am Kopf der Säule eine Wasserstoff enthaltende gasförmige Fraktion und im Sumpf der Säule eine Kohlenmonoxid und Methan enthaltende flüssige Fraktion erhält;
- mindestens einen Teil des Kopfgases aus der ersten Abtriebssäule (B) in einen zweiten Wärmetauscher (K) einleitet und unter Bildung eines zweiphasigen Fluids partiell kondensiert;
- in einem zweiten Phasenscheider (H) das zweiphasige Fluid in einen kondensierten Teil und einen hauptsächlich Wasserstoff enthaltenden nicht kondensierten Teil trennt;
- mindestens eine Fraktion des kondensierten Teils in eine zweite Abtriebssäule (I) einleitet, wobei man am Kopf einen wasserstoffreichen gasförmigen Teil und im Sumpf eine flüssige Fraktion erhält;
**dadurch gekennzeichnet, daß** man den nicht kondensierten Teil aus dem ersten Phasenscheider anwärmt und in das zu behandelnde Gemisch zurückführt oder ausschleust und die flüssige Fraktion im Sumpf der zweiten Säule kohlenmonoxidreich ist.

2. Verfahren nach Anspruch 1, bei dem man mindestens einen Teil der flüssigen Fraktion aus der ersetn Abtriebssäule (B) in eine Reinigungssäule (C) einleitet, wobei man am Kopf der Säule weitgehend reines Kohlenmonoxid und im Sumpf der Säule eine methanreiche Flüssigkeit erhält.

3. Verfahren nach Anspruch 1 oder 2, bei dem man einen Teil des Kopfgases aus der ersten Abtriebssäule (B) und/oder mindestens einen Teil des wasserstoffreichen Gases aus dem ersten Phasenscheider in eine Permeations- oder Adsorptionseinheit einleitet und von der Permeations- oder Adsorptionseinheit ein mit Kohlenmonoxid angereichertes Gas in das zu behandelnde Gasgemisch einleitet.

4. Verfahren nach Anspruch 1, bei dem man einen Teil des Kopfgases aus der ersten Abtriebssäule (B) in das zu behandelnde Gasgemisch zurückführt, ohne es durch eine Permeations- oder Adsorptionseinheit zu leiten.

5. Verfahren nach einem der vorhergehenden Ansprüche, bei dem die Trennenergie vollständig durch Joule-Thomson-Entspannung des zu behandelnden Gasgemischs aufgebracht wird.

6. Verfahren nach einem der Ansprüche 1 bis 4, bei dem ein Teil der Trennenergie durch Wärmeaustausch zwischen dem zu behandelnden Gasgemisch und einer kryogenen Flüssigkeit oder durch Einleiten von kryogener Flüssigkeit in eine der Säulen aufgebracht wird.

7. Verfahren nach einem der Ansprüche 1 bis 4 oder 6, bei dem ein Teil der Trennenergie mit Hilfe eines Kältezyklus mit einem unabhängigen Kältemittel aufgebracht wird.

8. Verfahren nach einem der vorhergehenden Ansprüche, bei dem man den nicht kondensierten Teil aus dem zweiten Phasenscheider (H) in einer Turbine (J) entspannt.

9. Verfahren nach einem der vorhergehenden Ansprüche, bei dem man höchstens 15% des zu behandelnden Gemischs in den zweiten Phasenscheider (H) einleitet.

10. Vorrichtung zur Gewinnung von Kohlenmonoxid und Wasserstoff aus einem Gasgemisch, das im wesentlichen diese beiden Substanzen und kleine Mengen an Methan und Verunreinigungen enthält, enthaltend:
- einen ersten Wärmetauscher (D), einen ersten Phasenscheider (A), eine erste Abtriebssäule (B), Einrichtungen zum Kühlen des zu behandelnden Gasgemischs im ersten Wärmetauscher, Einrichtungen (1, 2) zum Eintragen mindestens eines Teils des gekühlten Gasgemischs in den ersten Phasenscheider und zum Abziehen eines im wesentlichen Wasserstoff enthaltenden gasförmigen Teils und eines flüssigen Teils daraus, Einrichtungen zum Einleiten mindestens einer Fraktion des flüssigen Teils in die erste Abtriebssäule und Einrichtungen zum Abziehen einer hauptsächlich Kohlenmonoxid und Methan enthaltenden Flüssigkeit daraus;
- einen zweiten Wärmetauscher (K), einen zweiten Phasenscheider (H), eine zweite Abtriebssäule (I), Einrichtungen zum Einleiten mindestens eines Teils des Kopfgases aus der ersten Abtriebssäule in den zweiten Wärmetauscher und danach in den zweiten Phasenscheider und Einrichtungen zum Einleiten mindestens eines Teils des kondensierten Teils aus dem zweiten Phasenscheider in die zweite Abtriebssäule und Einrichtungen zum Abziehen eines wasserstoffreichen Gases und einer kohlenmonoxidreichen Flüssigkeit aus der zweiten Abtriebssäule,
**dadurch gekennzeichnet, daß** sie Einrichtungen zum Anwärmen des gasförmigen Teils aus dem ersten Phasenscheider und zum Zurückführen des gasförmigen Teils in das zu behandelnde Gasgemisch enthält.

11. Vorrichtung nach Anspruch 10, enthaltend eine Reinigungssäule (C) und Einrichtungen zum Einleiten mindestens eines Teils der Sumpfflüssigkeit aus der ersten Abtriebssäule in den Kopf der Reinigungssäule und Einrichtungen zum Abziehen eines mit Kohlenmonoxid angereicherten Kopfgases und einer mit Methan angereicherten Sumpfflüssigkeit.

12. Vorrichtung nach Anspruch 10, bei der die Flüssigkeit aus dem zweiten Phasenscheider (H) in den Kopf der zweiten Abtriebssäule (I) eingeleitet wird.

13. Vorrichtung nach Anspruch 10 oder 11, enthaltend Einrichtungen (F) zum Abtrennen eines Gases durch Permeation oder Adsorption, Einrichtungen (8') zum Einleiten eines Teils des Kopfgases aus der ersten Abtriebssäule (B) und/oder mindestens eines Teils des nicht kondensierten Teils aus dem ersten Phasenscheider (A) in Einrichtungen zum Trennen durch Permeation oder Adsorption im Gemisch zur Gewinnung einer an Kohlenmonoxid angereicherten gasförmigen Fraktion und Einrichtungen zum Wiedereinleiten dieser Fraktion in das zu behandelnde Gemisch.

14. Vorrichtung nach Anspruch 10, 11 oder 12, enthaltend einen Kältezyklus mit einem unabhängigen Kältemittel.

15. Vorrichtung nach Anspruch 10, 11, 12 oder 13, enthaltend eine Turbine (J) und Einrichtungen zum Einleiten eines nicht kondensierten Teils aus dem zweiten Phasenscheider (H) in die Turbine.

16. Vorrichtung nach einem der Ansprüche 10 bis 15, bei der die erste Abtriebssäule keinen Kopfkondensator aufweist.

17. Vorrichtung nach einem der Ansprüche 10 bis 16, bei der die zweite Abtriebssäule keinen Sumpfverdampfer aufweist.

## Claims

1. Process for the production of carbon monoxide and hydrogen from a gas mixture to be treated which essentially comprises these two substances and methane, the process comprising the following steps:
- cooling the gas mixture to be treated (2) so as to partially condense it;
- separating a condensed portion of the mixture from an uncondensed portion containing mainly hydrogen in a first phase separator (A);
- sending at least one fraction of the condensed portion into a first stripping column (B) in order to produce a gas fraction containing hydrogen at the top of the column and a liquid fraction containing carbon monoxide and methane at the bottom of the column;
- sending at least some of the overhead gas from the first stripping column (B) into a second heat exchanger (K) in order to partially condense it and to form a two-phase fluid;
- separating the two-phase fluid into a condensed portion and an uncondensed portion containing mainly hydrogen in a second phase separator (H);
- sending at least one fraction of the condensed portion into a second stripping column (I) in order to produce a hydrogen-rich gaseous portion at the top and a liquid fraction at the bottom, **characterized in that** the uncondensed portion of the first phase seperator is warmed and recycled into the mixture to be treated, or withdrawn and the liquid fraction at the bottom of the second column is rich in carbon monoxide.

2. Process according to Claim 1, in which at least some of the liquid fraction from the first stripping column (B) is sent into a purification column (C) in order to produce substantially pure carbon monoxide at the top of the column and a methane-rich liquid at the bottom of the column.

3. Process according to Claim 1 or 2, in which some of the overhead gas from the first stripping column (B) and/or at least some of the hydrogen-rich gas coming from the first phase separator is sent into a permeation unit or into an adsorption unit and a carbon-monoxide-enriched gas is sent from the permeation unit or adsorption unit into the gas mixture to be treated.

4. Process according to Claim 1, in which some of the overhead gas from the first stripping column (B) is recycled into the gas mixture to be treated without passing through a permeation unit or adsorption unit.

5. Process according to one of the preceding claims, in which the energy of separation is entirely provided by Joule-Thomson expansion of the gas mixture to be treated.

6. Process according to one of Claims 1 to 4, in which some of the energy of separation is provided by heat exchange between the gas mixture to be treated and a cryogenic liquid, or by injecting a cryogenic liquid into one of the columns.

7. Process according to one of Claims 1 to 4 or 6, in which some of the energy of separation is provided by means of a refrigeration cycle using an autonomous refrigerant.

8. Process according to one of the preceding claims, comprising the step of expanding the uncondensed portion from the second phase separator (H) in a turbine (J).

9. Process according to one of the preceding claims, in which at most 15% of the mixture to be treated is sent into the second phase separator (H).

10. Plant for the production of carbon monoxide and hydrogen from a gas mixture which essentially comprises these two substances and small amounts of methane and impurities, the plant comprising:
. a first heat exchanger (D), a first phase separator (A), a first stripping column (B), means for cooling the gas mixture to be treated in the first heat exchanger, means (1, 2) for introducing at least some of the cooled gas mixture into the first phase separator and for withdrawing therefrom a gaseous portion, essentially comprising hydrogen, and a liquid portion, means for sending at least one fraction of the liquid portion into the first stripping column and means for withdrawing therefrom a liquid containing mainly carbon monoxide and methane;
. a second heat exchanger (K), a second phase separator (H), a second stripping column (I), means for sending at least some of the overhead gas from the first stripping column into the second heat exchanger and then into the second phase separator, means for sending at least some of the condensed portion from the second phase separator into the second stripping column and means for withdrawing a hydrogen-rich gas and a carbon-monoxide-rich liquid from the second stripping column, **characterized in that** it comprises means for heating the gaseous portion from the first phase separator and for recycling the gaseous portion into the gas mixture to be treated.

11. Plant according to Claim 15, comprising a purification column (C) and means for sending at least some of the bottom liquid from the first stripping column into the top of the purification column and means for withdrawing a carbon-monoxide-enriched overhead gas and a methane-enriched bottom liquid.

12. Plant according to Claim 10, in which the liquid from the second phase separator (H) is sent into the top of the second stripping column (I).

13. Plant according to Claim 10 or 11, comprising means (F) for separating a gas by permeation or adsorption, means (8') for sending some of the overhead gas from the first stripping column (B) and/or at least some of the uncondensed portion from the first phase separator (A) into permeation or adsorption separation means, this gas being mixed in order to produce a carbon-monoxide-enriched gas fraction, and means for sending this fraction back into the mixture to be treated.

14. Plant according to Claim 10, 11 or 12, comprising a refrigeration cycle using an autonomous refrigerant.

15. Plant according to Claim 10, 11, 12 or 13, comprising a turbine (J) and means for sending an uncondensed portion from the second phase separator (H) into the turbine (J).

16. Plant according to one of Claims 10 to 15, in which the first stripping column does not have a top condenser.

17. Plant according to one of Claims 10 to 16, in which the second stripping column does not have a bottom reboiler.
